# EUROPEAN PATENT APPLICATION

(11) **EP 4 665 079 A1**
(43) Date of publication of application: **17.12.2025**
(21) Application number: 24752763.3
(22) Date of filing: 31.01.2024
(51) Int. Cl.: H04W 76/28

(54) **METHOD USED FOR WIRELESS COMMUNICATION, AND DEVICE**

(30) Priority: 06.02.2023 CN 202310094071
(71) Applicant: Apogee Networks, LLC, Dallas, TX 75201 (US)
(72) Inventor: CHEN, Yu, Shanghai 201206 (CN); ZHANG, Xiaobo, Shanghai 201206 (CN)
(74) Representative: Gunzelmann, Rainer
(86) International application number: PCT/CN2024/074941
(87) International publication number: WO 2024/164907

(57) **Abstract**

Disclosed in the present application are a method used for wireless communication and a device. The method comprises: receiving first signaling and second signaling, the first signaling being used for configuring a first DRX group, the first DRX group comprising a first cell set, and the second signaling being used for configuring a first state of at least one cell in the first cell set; and monitoring a PDCCH during the active time of the first DRX group, the active time of the first DRX group only comprising the time during which said at least one cell in the first cell set is not in the first state. The first signaling is used for configuring a first timer, and the operation period of the first timer is used for determining the active time of the first DRX group, the first timer only operating at the beginning of one DRX cycle. The present application can better save power by means of the indication of the first signaling and the second signaling.

## Description

### Technical Field

The present application relates to a transmission method and apparatus in a wireless communication system, and relates to determination of an active time in discontinuous reception, in particular to saving power.

### Background Art

The application scenarios of future wireless communication systems are becoming increasingly diverse, and different application scenarios impose different performance requirements on a system. In order to meet different performance needs of multiple application scenarios, it was decided to study a new radio (NR) (or fifth generation, 5G) at the 3GPP (3rd Generation Partnership Project) RAN (Radio Access Network) #72 plenary meeting, and a WI (Work Item) of NR was approved at the 3GPP RAN #75 plenary meeting, starting the standardization work for NR.

In communication, both LTE (Long Term Evolution) and 5G NR involve the accurate reception of reliable information, an optimized energy efficiency ratio, determination of information validity, flexible resource allocation, a scalable system structure, efficient non-access layer information processing, lower service interruption and drop rates, and support for low power consumption. These are of great significance in normal communication between base stations and user equipment, rational resource scheduling, and system load balancing. It can be said to be the cornerstone of high throughput, meeting various service communication requirements, improving the spectrum utilization rate, and enhancing service quality, all of which are indispensable for eMBB (enhanced Mobile BroadBand), URLLC (Ultra Reliable Low Latency Communication), and eMTC (enhanced Machine Type Communication). At the same time, there are widespread needs in IIoT (Industrial Internet of Things), in V2X (Vehicular to X), in device-to-device communication (Device to Device), in unlicensed spectrum communication, in user communication quality monitoring, in network planning and optimization, in NTN (Non Territerial Network), in TN (Territerial Network), in dual connectivity systems, in wireless resource management and multi-antenna codebook selection, and in signaling design, neighbor management, service management, and beamforming. Information sending manners are divided into broadcast and unicast, and the two sending manners are essential for 5G systems because they are very helpful in meeting the above needs. A manner in which UE is connected to a network can be either in direct connection or relay connection.

With the continuous expansion of system scenarios and increasing complexity, higher demands are placed on reducing drop rates, minimizing latency, improving reliability, enhancing system stability, increasing service flexibility, and optimizing power efficiency. Additionally, the system design must take compatibility among different systems and versions into account.

The 3GPP standardization organization has done relevant standardization work for 5G and formed a series of standards. The standard content can refer to:
https://www.3gpp.org/ftp/Specs/archive/38_series/38.213/38213-h00.zip
https://www.3gpp.org/ftp/Specs/archive/38_series/38.321/38321-h00.zip
https://www.3gpp.org/ftp/Specs/archive/38_series/38.331/38331-h00.zip
https://www.3gpp.org/ftp/Specs/archive/38 series/38.304/38304-h00.zip

### Summary of the Invention

In a wireless communication system, a user terminal saves power through a DRX (Discontinuous Reception) mechanism. After DRX is configured, the terminal needs to monitor a PDCCH during an active time, which can save terminal power. Configuring DRX can include configuring DRX groups, and one DRX group can include one or more serving cells. How to determine the active time of the terminal based on a first state of the serving cell of the DRX group is a problem that needs to be solved. Researchers have found that the transceiving of the terminal should be related to a state of the serving cell. In the prior art, for the DRX of the terminal, the state of the cell is not considered, resulting in that the power saving performance of the terminal is affected. That is to say, the DRX of the terminal should consider those states of the cell that will affect the terminal DRX. Further, the researchers have found that, especially, some cells of one DRX group are in the first state, or different cells are in different states, if the terminal easily leaves the active time, it may lead to missing signals on a PDCCH. Therefore, when the DRX group includes multiple cells, how to determine the active time of the terminal based on the first state of these cells is also a problem that needs to be further solved. In addition, the researchers have found that in newest 3GPP research topics, an issue of base station power saving is involved. In order to reduce the transmission power, a base station may turn off or change the transmission of some signals, may transmit selectively, may transmit with different parameters, may send for RNTI other than C-RNTI, etc. These may affect the DRX of the terminal, or the power of the terminal can be further saved based on these characteristics of the cell. Therefore, saving the power of a network and the power of the terminal at the same time is also one of benefits of methods proposed in the present application.

In response to the above-mentioned problems, the present application provides a solution.

It should be explained that in the absence of conflicts, embodiments and features in the embodiments in any node of the present application can be applied to any other node. In the absence of conflicts, the embodiments and the features in the embodiments of the present application can be arbitrarily combined with each other. At the same time, methods proposed in the present application can also be used for solving other problems in communication.

The present application discloses a method used in a first node for wireless communication, comprising:
receiving first signaling and second signaling, wherein the first signaling is used for configuring a first DRX group; the first DRX group comprises a first cell set; and the second signaling is used for configuring a first state of at least one cell in the first cell set;
and monitoring a PDCCH during an active time of the first DRX group, wherein the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

As one embodiment, the problems to be solved by the present application include: how to further save power of a terminal, and how to determine an active time based on a first state of a cell of a DRX group; and how to save both the power of a network and the power of the terminal.

As one embodiment, the benefits of the above method comprise: the power of a terminal is saved, the power of a base station is saved, and good flexibility is achieved; and the complexity of a system is relatively low.

Specifically, according to one aspect of the present application, a feature of one cell being in the first state includes that the one cell turns off data transmission based on dynamic scheduling.

Specifically, according to one aspect of the present application, the meaning of the sentence "an operation period of the first timer is used for determining the active time of the first DRX group" is: the active time of the first DRX group comprises an intersection of a time during which at least one cell in the first cell set is not in the first state and the operation period of the first timer; and the active time of the first DRX group does not comprise a time during which each cell in the first cell set is in the first state in the operation period of the first timer.

Specifically, according to one aspect of the present application, a first signal is sent on a PUCCH, the first signal being used for requesting scheduling,
wherein the active time of the first DRX group comprises an intersection of a time during which at least one cell in the first cell set is not in the first state and a time during which the first signal waits for processing after being sent; and the active time of the first DRX group does not comprise a time outside the time during which at least one cell in the first cell set is not in the first state in the time during which the first signal waits for processing after being sent.

Specifically, according to one aspect of the present application, as a response to all cells in the first cell set being in the first state, at least the latter of the first timer and a second timer is stopped,
wherein an operation period of the second timer is the maximum duration until one downlink retransmission is received, and the operation period of the second timer is used for determining the active time of the first DRX group.

Specifically, according to one aspect of the present application, as a response to all cells in the first cell set being in the first state, at least the latter of the first timer and a third timer is stopped,
wherein an operation period of the third timer is the shortest time to downlink allocation for HARQ retransmissions expected for a MAC entity of the first node.

Specifically, according to one aspect of the present application, third signaling is received; the third signaling is DCI or the third signaling is a MAC CE; the third signaling is used for activating at least one cell in the first cell set applying the first state; and as a response to receiving the third signaling, the first timer is stopped.

Specifically, according to one aspect of the present application, a time during which the at least one cell in the first cell set enters the first state is related to a reception time of the third signaling, and when the third signaling is received 4 ms before the at least one cell in the first cell set leaves the first state, the any cell in the first cell set applying the first state is immediately activated; and when the third signaling is received within 4 ms of the at least one cell in the first cell set leaving the first state, the any cell in the first cell set applying the first state is not immediately activated.

Specifically, according to one aspect of the present application, the first node is an Internet of Things terminal.

Specifically, according to one aspect of the present application, the first node is user equipment.

Specifically, according to one aspect of the present application, the first node is a relay.

Specifically, according to one aspect of the present application, the first node is an access network device.

Specifically, according to one aspect of the present application, the first node is a vehicle terminal.

Specifically, according to one aspect of the present application, the first node is an aircraft.

Specifically, according to one aspect of the present application, the first node is a mobile phone.

The present application discloses a method used in a second node for wireless communication, comprising:
sending first signaling and second signaling, wherein the first signaling is used for configuring a first DRX group; the first DRX group comprises a first cell set; the second signaling is used for configuring a first state of at least one cell in the first cell set;
a recipient of the first signaling monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

Specifically, according to one aspect of the present application, a feature of one cell being in the first state includes that the one cell turns off data transmission based on dynamic scheduling.

Specifically, according to one aspect of the present application, the meaning of the sentence "an operation period of the first timer is used for determining the active time of the first DRX group" is: the active time of the first DRX group comprises an intersection of a time during which at least one cell in the first cell set is not in the first state and the operation period of the first timer; and the active time of the first DRX group does not comprise a time during which each cell in the first cell set is in the first state in the operation period of the first timer.

Specifically, according to one aspect of the present application, a first signal is received on a PUCCH, the first signal being used for requesting scheduling,
wherein the active time of the first DRX group comprises an intersection of a time during which at least one cell in the first cell set is not in the first state and a time during which the first signal waits for processing after being sent; and the active time of the first DRX group does not comprise a time outside the time during which at least one cell in the first cell set is not in the first state in the time during which the first signal waits for processing after being sent.

Specifically, according to one aspect of the present application, a response to all cells in the first cell set being in the first state is used for triggering the stopping of at least the latter of the first timer and a second timer,
wherein an operation period of the second timer is the maximum duration until one downlink retransmission is received, and the operation period of the second timer is used for determining the active time of the first DRX group.

Specifically, according to one aspect of the present application, all cells in the first cell set being in the first state is used for triggering the stopping of at least the latter of the first timer and a third timer,
wherein an operation period of the third timer is the shortest time to downlink allocation for HARQ retransmissions expected for a MAC entity of the first node.

Specifically, according to one aspect of the present application, third signaling is sent; the third signaling is DCI or the third signaling is a MAC CE; the third signaling is used for activating at least one cell in the first cell set applying the first state; and the third signaling is used for triggering the stopping of the first timer.

Specifically, according to one aspect of the present application, a time during which the at least one cell in the first cell set enters the first state is related to a reception time of the third signaling, and when the third signaling is received 4 ms before the at least one cell in the first cell set leaves the first state, the any cell in the first cell set applying the first state is immediately activated; and when the third signaling is received within 4 ms of the at least one cell in the first cell set leaving the first state, the any cell in the first cell set applying the first state is not immediately activated.

Specifically, according to one aspect of the present application, the second node is a network device.

Specifically, according to one aspect of the present application, the second node is a base station.

Specifically, according to one aspect of the present application, the second node is a relay.

Specifically, according to one aspect of the present application, the second node is an access point.

Specifically, according to one aspect of the present application, the second node is an aircraft.

Specifically, according to one aspect of the present application, the second node is a satellite.

The present application discloses a first node for wireless communication, comprising:
a first receiver receiving first signaling and second signaling, wherein the first signaling is used for configuring a first DRX group; the first DRX group comprises a first cell set; the second signaling is used for configuring a first state of at least one cell in the first cell set;
the first receiver monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

The present application discloses a second node for wireless communication, comprising:
a second transmitter sending first signaling and second signaling, wherein the first signaling is used for configuring a first DRX group; the first DRX group comprises a first cell set; the second signaling is used for configuring a first state of at least one cell in the first cell set;
a recipient of the first signaling monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

As one embodiment, compared with the traditional solution, the present application has the following advantages:
Be more power-saving and more flexible. Both a network and a terminal can save more power. Cells in different states are supported. For example, some of cells included in one DRX group are in a first state, and some are not in the first state.
Discontinuous transmission and/or discontinuous reception of cells are/is supported.
It is avoided that the terminal misses the reception of a signal from the network.

### Brief Description of the Drawings

By reading the detailed description of the non-limiting embodiments in the following drawings, other features, purposes and advantages of the present application will become more obvious.
FIG. 1 shows a flowchart of receiving first signaling, receiving second signaling, and monitoring a PDCCH during an active time of a first DRX group according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of a time during which any cell in a first cell set is in a first state according to one embodiment of the present application;
FIG. 7 shows a schematic diagram of an active time of a first DRX group according to one embodiment of the present application;
FIG. 8 shows a schematic diagram of an active time of a first DRX group according to one embodiment of the present application;
FIG. 9 shows a schematic diagram of a reception moment of third signaling and a time during which a first cell is in a first state according to one embodiment of the present application;
FIG. 10 illustrates a schematic diagram of a processing apparatus used in a first node according to one embodiment of the present application; and
FIG. 11 illustrates a schematic diagram of a processing apparatus used in a second node according to one embodiment of the present application.

### Detailed Description of Embodiments

The technical solution of the present application will be further described in detail below in conjunction with the accompanying drawings. It should be noted that, in the absence of conflicts, the embodiments and features in the embodiments of the present application can be arbitrarily combined with each other.

### Embodiment 1

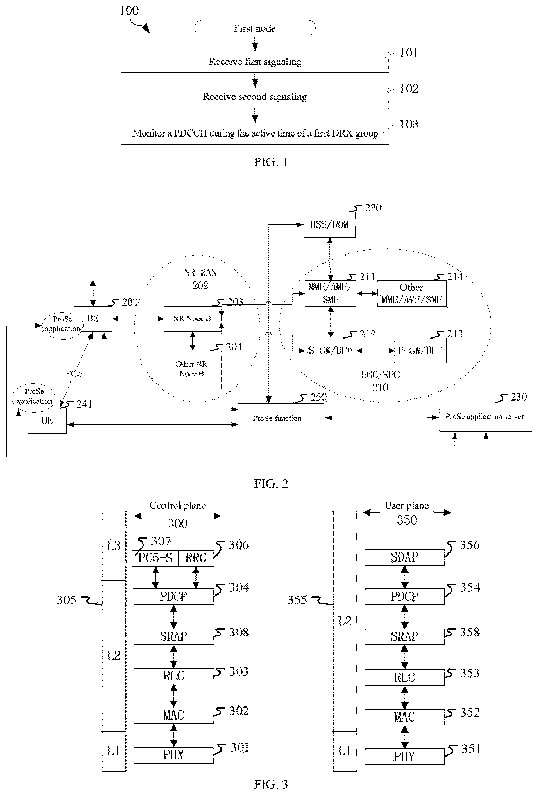

Embodiment 1 illustrates a flowchart of receiving first signaling, receiving second signaling, and monitoring a PDCCH during an active time of a first DRX group according to one embodiment of the present application, as shown in FIG. 1. In FIG. 1, each block represents one step, and it is particularly important to emphasize that the order of the blocks in the figure does not represent a temporal sequence between the steps represented.

In Embodiment 1, a first node in the present application receives first signaling in step 101, receives second signaling in step 102, and monitors a PDCCH during an active time of a first DRX group in step 103,
wherein the first signaling is used for configuring a first DRX group; the first DRX group comprises a first cell set; the second signaling is used for configuring a first state of at least one cell in the first cell set; the active time of the first DRX group only comprises a time during which at least one cell in the first cell set is not in the first state; the first signaling is used for configuring a first timer, and an operation period of the first timer is used for determining the active time of the first DRX group; and the first timer only operates at a beginning of one DRX cycle.

As one embodiment, the first node is UE (User Equipment).

As one embodiment, the first node is in an RRC connected state.

As one embodiment, methods proposed in the present application are not related to sidelink communication.

As one embodiment, methods proposed in the present application are applied to direct communication between a terminal and a network.

As one embodiment, a serving cell refers to a cell where UE resides. Performing cell search comprises: UE searches for one suitable cell of a selected PLMN (Public Land Mobile Network) or SNPN (Stand-alone Non-Public Network), selects the one suitable cell to provide available services, and monitors a control channel of the one suitable cell. This process is defined as residing on the cell; that is, a resided cell is a serving cell of this UE with respect to the UE. Residing on one cell in an RRC idle state or RRC inactive state has the following benefits: the UE can receive system information from the PLMN or SNPN; after registration, if the UE wants to establish an RRC connection or continue one suspended RRC connection, the UE may perform initial access via a control channel of the resident cell; the network can page the UE; and the UE can receive ETWS (Earthquake and Tsunami Warning System) and CMAS (Commercial Mobile Alert System) notifications.

As one embodiment, for UE in an RRC connected state not configured with CA/DC (carrier aggregation/dual connectivity), there is only one serving cell comprising a primary cell. For UE in the RRC connected state configured with CA/DC (carrier aggregation/dual connectivity), a serving cell is used for indicating a cell set comprising a special cell (SpCell) and all secondary cells. A primary cell (PCell) is an MCG (Master Cell Group) cell, and works on a primary frequency, and UE performs an initial connection establishment process or initiates connection reestablishment on the primary cell. For dual connection operations, the special cell refers to a PCell of MCG (Primary Cell) or a PSCell (Primary SCG Cell) of an SCG (Secondary Cell Group); and for non-dual connectivity operations, the special cell refers to a PCell.

As one embodiment, a frequency at which the SCell (Secondary Cell) works is a secondary frequency.

As one embodiment, an individual content of an information element is referred to as a field.

As one embodiment, MR-DC (Multi-Radio Dual Connectivity) refers to dual connectivity of E-UTRA and NR nodes, or dual connectivity between two NR nodes.

As one embodiment, in MR-DC, a radio access node providing a control plane connection to a core network is a primary node, and the primary node may be a primary eNB, a primary ng-eNB, or a primary gNB.

As one embodiment, MCG refers to, in MR-DC, a group of serving cells associated with the primary node, comprises an SpCell, and may also, optionally, comprise one or more SCells.

As one embodiment, a PCell is an SpCell of an MCG.

As one embodiment, a PSCell is an SpCell of an SCG.

As one embodiment, in MR-DC, a radio access node that provides additional resources to UE without providing a control plane connection to a core network is a secondary node. The secondary node may be an en-gNB, a secondary ng-eNB, or a secondary gNB.

As one embodiment, in MR-DC, one group of serving cells associated with the secondary node is an SCG (secondary cell group), comprising an SpCell and, optionally, one or more SCells.

As one embodiment, the first node is configured with at least an MCG, and the MCG with which the first node is configured comprises at least one SCell.

As one embodiment, the first node is configured with an MCG and an SCG.

As one sub-embodiment of this embodiment, the MCG with which the first node is configured comprises at least one SCell.

As one sub-embodiment of this embodiment, the SCG with which the first node is configured comprises at least one SCell.

As one embodiment, the first node is configured to communicate with multiple cells.

As one embodiment, the first node is configured to perform data transmission with multiple cells.

As one embodiment, the first node is configured to be served by multiple cells through a dedicated channel.

As one embodiment, the first signaling is RRC signaling.

As one embodiment, the first signaling comprises an RRCReconfiguration message.

As one embodiment, the first signaling comprises partial domains or partial cells in an RRCReconfiguration message.

As one embodiment, the first signaling only comprises partial domains or partial cells in an RRCReconfiguration message.

As one embodiment, the first signaling is a configuration of one cell group or is a part of a configuration of one cell group.

As one sub-embodiment of this embodiment, the one cell group is one of MCG or SCG.

As one sub-embodiment of this embodiment, a configuration of the one cell group refers to a CellGroupConfig cell.

As one sub-embodiment of this embodiment, a configuration of the one cell group refers to a MAC-CellGroupConfig cell in CellGroupConfig.

As one sub-embodiment of this embodiment, the first signaling is a part of a MAC configuration of the one cell group.

As one sub-embodiment of this embodiment, the first signaling belongs to a MAC-CellGroupConfig cell.

As one embodiment, the first signaling comprises DRX-Config.

As one embodiment, the first signaling comprises DRX-ConfigSecondaryGroup.

As one embodiment, the first signaling comprises one of DRX-ConfigSecondaryGroup or DRX-Config.

As one embodiment, the first signaling is unicast.

As one embodiment, the first signaling is sent to the first node using a dedicated channel.

As one embodiment, the first signaling comprises DRX-ConfigSecondaryGroup, and the first DRX group is SecondaryGroup of DRX.

As one embodiment, DRX-ConfigSecondaryGroup comprised in the first signaling is used for configuring a second DRX group.

As one sub-embodiment of this embodiment, the first DRX group is a first DRX group or a second DRX group.

As one embodiment, when a second DRX group is configured, the first DRX group must be configured.

As one embodiment, when the first signaling does not comprise DRX-ConfigSecondaryGroup, the first DRX group is a default DRX group.

As one embodiment, when the first node is not configured with DRX-ConfigSecondaryGroup, the first DRX group is a default DRX group.

As one embodiment, the first node only has one default DRX group.

As one embodiment, the first signaling comprises DRX-ConfigSecondaryGroup, and the first DRX group is a second DRX group.

As one embodiment, the first signaling comprises DRX-Config, and the first DRX group is a group outside SecondaryGroup of DRX.

As one embodiment, the first signaling comprises DRX-Config, and the first DRX group is a first DRX group.

As one embodiment, the first signaling comprises DRX-Config, and the first DRX group is a legacy DRX group.

As one embodiment, the first signaling comprises DRX-Config, and the first DRX group is a default DRX group.

As one embodiment, the first signaling comprises DRX-Config, and the first DRX group is a default DRX group.

As one embodiment, the first signaling comprises DRX-Config, and under the condition that the second DRX group is not configured, it is considered by default that a DRX configuration targets one DRX group, and the one DRX group is the first DRX group.

As one embodiment, the first signaling is DRX-Config, and under the condition that a second DRX group is not configured, it is considered by default that all serving cells belong to one DRX group, and the one DRX group is the first DRX group.

As one sub-embodiment of this embodiment, the all cells belong to either MCG or SCG.

As one embodiment, one DRX group is one group of cells that are configured by RRC, and has the same active time.

As one embodiment, the first signaling comprises DRX-Config, and cells that do not belong to a second DRX group all belong to the first DRX group.

As one embodiment, the first signaling comprises DRX-ConfigSecondaryGroup, and the first signaling explicitly indicates whether one serving cell belongs to the first DRX group; and the first DRX group is a second DRX group.

As one embodiment, if the first signaling comprises DRX-Config, and the first node is not configured with a second DRX group, DRX configured by the first signaling is applicable to all serving cells, and thus all serving cells belong to the same one DRX group, that is, the first DRX group.

As one sub-embodiment of this embodiment, the all cells belong to either MCG or SCG.

As one embodiment, a serving cell of a MAC entity of the first node may be configured with two DRX groups, and the two DRX groups have separate DRX parameters; when RRC does not configure a second DRX group, there is only one DRX group and all serving cells belong to this DRX group; and when two DRX groups are configured, each serving cell only belongs to one of them.

As one embodiment, the meaning of the phrase of configuring a first DRX group comprises: configuring a DRX parameter of the first DRX group.

As one embodiment, the meaning of the phrase of configuring a first DRX group comprises: when there is only one DRX group, a DRX parameter configured by the first signaling is considered as targeting the first DRX group.

As one embodiment, the meaning of the phrase of configuring a first DRX group comprises: when a second DRX group is not configured, a DRX parameter configured by the first signaling is considered as targeting the first DRX group.

As one embodiment, the meaning of the phrase of configuring a first DRX group comprises: the first DRX group is a second DRX group, and DRX-ConfigSecondaryGroup comprised in the first signaling configures a parameter of the first DRX group.

As one embodiment, the meaning of the phrase configuring a first DRX group comprises: when a second DRX group is not configured, DRX-Config comprised in the first signaling configures a parameter of the first DRX group.

As one embodiment, when a second DRX group is configured, the first DRX group is one of a first DRX group or a second DRX.

As one embodiment, the meaning of the phrase of configuring a first DRX group comprises: when the first DRX group is a second DRX group, configuring the first DRX group comprises configuring serving cells included in the first DRX group.

As one embodiment, the meaning of the phrase of configuring a first DRX group comprises: when the first DRX group is a second DRX group, configuring the first DRX group comprises configuring the first cell set included in the first DRX group.

As one embodiment, when a second DRX group is not configured, the first cell set included in the first DRX group comprises all serving cells.

As one embodiment, when a second DRX group is configured, the first DRX group is the second DRX group, and the first signaling explicitly indicates whether one serving cell belongs to the first cell set included in the first DRX group.

As one embodiment, when a second DRX group is configured, the first DRX group is a first DRX group, and the first cell set included in the first DRX group comprises all serving cells that do not belong to the second DRX group.

As one embodiment, when a second DRX group is configured, the first DRX group is not the second DRX group, and the first cell set included in the first DRX group comprises all serving cells that do not belong to the second DRX group.

As one embodiment, a second DRX group only comprises an SCell.

As one embodiment, the first signaling explicitly indicates whether one SCell belongs to a second DRX group.

As one embodiment, if the first signaling does not indicate that one SCell belongs to a second DRX group, the one SCell belongs to a first DRX group.

As one embodiment, the first DRX is a DRX group other than a second DRX group in two DRX groups.

As one embodiment, SCellConfig included in the first signaling, SCellConfig included in the first signaling is used for configuring any SCell, and the SCellConfig included in the first signaling comprises secondaryDRX-GroupConfig used for indicating whether the any SCell belongs to a second DRX group.

As one embodiment, DRX configured by the first signaling is not related to a sidelink.

As one embodiment, the first signaling is used for configuring a DRX parameter.

As one embodiment, the first cell set of the first DRX group comprises a PCell.

As one sub-embodiment of this embodiment, the first cell set of the first DRX group comprises all SCells.

As one sub-embodiment of this embodiment, the first cell set of the first DRX group comprises a PSCell.

As one sub-embodiment of this embodiment, the first cell set of the first DRX group comprises at least one SCell.

As one sub-embodiment of this embodiment, the first cell set of the first DRX group does not comprise an SCell.

As one embodiment, the first cell set of the first DRX group comprises a PSCell.

As one sub-embodiment of this embodiment, the first cell set of the first DRX group comprises all SCells.

As one sub-embodiment of this embodiment, the first cell set of the first DRX group comprises a PCell.

As one sub-embodiment of this embodiment, the first cell set of the first DRX group comprises at least one SCell.

As one sub-embodiment of this embodiment, the first cell set of the first DRX group does not comprise an SCell.

As one embodiment, the first cell set of the first DRX group does not comprise a PCell.

As one sub-embodiment of this embodiment, the first cell set of the first DRX group comprises all SCells.

As one sub-embodiment of this embodiment, the first cell set of the first DRX group comprises a PCell.

As one sub-embodiment of this embodiment, the first cell set of the first DRX group comprises at least one SCell.

As one sub-embodiment of this embodiment, the first cell set of the first DRX group does not comprise an SCell.

As one embodiment, the second signaling is RRC signaling.

As one embodiment, the second signaling is L2 signaling.

As one embodiment, the second signaling comprises an RRCReconfiguration message.

As one embodiment, the second signaling comprises partial fields or partial cells in an RRCReconfiguration message.

As one embodiment, the second signaling and the first signaling are sent at different times.

As one embodiment, the second signaling and the first signaling are encapsulated in the same one RRC message.

As one embodiment, the second signaling is broadcast.

As one embodiment, the second signaling is unicast.

As one embodiment, the second signaling is sent to the first node through a dedicated channel.

As one embodiment, the first cell set is composed of all serving cells in the first DRX group.

As one embodiment, the first cell set is composed of all serving cells configured with a first state in the first DRX group.

As one embodiment, the second signaling is used for configuring a first state of at least two cells in the first cell set.

As one embodiment, the second signaling is used for configuring a first state of each cell in the first cell set.

As one embodiment, the meaning of the sentence that the second signaling is used for configuring a first state of at least one cell in the first cell set is or comprises: the second signaling is used for configuring at least one cell in the first cell set applying the first state.

As one embodiment, the meaning of the sentence that the second signaling is used for configuring a first state of at least one cell in the first cell set is or comprises: the second signaling is used for configuring at least one cell in the first cell set to stop applying the first state.

As one embodiment, the meaning of the sentence that the second signaling is used for configuring a first state of at least one cell in the first cell set is or comprises: the second signaling is used for configuring at least one cell in the first cell set applying the first state in a first time window set.

As one sub-embodiment of this embodiment, the second signaling indicates a second time window set, and the first time window set is a complementary set of the second time window set in a time domain.

As one sub-embodiment of this embodiment, the second signaling indicates the first time window set by indicating a complementary set of the first time window set in a time domain.

As one embodiment, the first time window set comprises at least one time window.

As one embodiment, time windows comprised in the first time window set are periodic.

As one embodiment, a time interval of any two time windows in the first time window set is equal.

As one embodiment, all time windows in the first time window set are equal in length.

As one embodiment, the first state may also include multiple sub-states.

As one sub-embodiment of this embodiment, signals supported by different sub-states of the first state are different.

As one sub-embodiment of this embodiment, combinations of reception and/or sending supported by different sub-states of the first state are different.

As one embodiment, different cells in the first cell set may be in the first state at different times.

As one embodiment, different cells in the first cell set may not be in the first state at different times.

As one embodiment, different cells in the first cell set may enter and/or leave the respective first state at different times.

As one embodiment, the meaning of the sentence that the second signaling is used for configuring a first state of at least one cell in the first cell set is or comprises: the second signaling is used for configuring a condition for at least one cell in the first cell set to enter and/or leave the first state.

As one embodiment, the meaning of the sentence that the second signaling is used for configuring a first state of at least one cell in the first cell set is or comprises: the second signaling is used for configuring the first state of only one cell in the first cell set.

As one embodiment, the meaning of the sentence that the second signaling is used for configuring a first state of at least one cell in the first cell set is or comprises: the second signaling is used for configuring the first state of each cell in the first cell set.

As one embodiment, the first state is related to network power saving.

As one embodiment, the first state is related to different signal sending methods.

As one embodiment, the first state is related to different signal reception methods.

As one embodiment, the first state is related to sending and/or reception methods of different reference signals.

As one embodiment, the first state is related to whether to support dynamic scheduling.

As one embodiment, the first state is related to allocation methods of different reference signal resources.

As one embodiment, the first state is related to different transmit powers.

As one embodiment, the first state is related to sending frequencies of different broadcast signals.

As one embodiment, the first state is related to whether to send a broadcast signal.

As one embodiment, the first state is related to whether to send an SSB (synchronization signal block).

As one embodiment, the first state is related to whether to send an SIB1 (System Information Block 1).

As one embodiment, the first state is not related to whether a single terminal is in an active time of a DRX group.

As one embodiment, the first state is related to a sending mode of a PDCCH.

As one embodiment, the feature of one cell in the first state includes that the one cell turns off data transmission based on dynamic scheduling.

As one embodiment, the feature of one cell in the first state includes that the one cell stops dynamic scheduling.

As one embodiment, the feature of one cell in the first state includes that the one cell stops any sending.

As one embodiment, the feature of one cell in the first state includes that the one cell stops the sending of any data.

As one embodiment, the feature of one cell in the first state includes that the one cell stops semi-continuous scheduling.

As one embodiment, the first state is a state of network energy saving.

As one embodiment, the first state is a DTX (discontinuous transmission) state of a cell.

As one embodiment, the first state is a state when the DTX of a cell is inactive.

As one embodiment, the first state is a DRX state of a cell.

As one embodiment, the first state is a state when the DRX of a cell is inactive.

As one embodiment, the first state is DRX and DTX states of a cell

As one embodiment, the first state is a no-reception and/or no-transmission state of a cell.

As one embodiment, the first node is not required to monitor a PDCCH in a time other than the active time of the first DRX group.

As one embodiment, the first node is required to monitor a PDCCH only during an active time of a DRX group.

As one embodiment, the first node may fall asleep in a time other than the active time of the first DRX group.

As one embodiment, the first node is required to monitor a PDCCH during the active time of the first DRX group.

As one embodiment, it is not necessary for the first node to monitor a PDCCH in a time other than the active time of the first DRX group under a condition that there are no other requirements to monitor the PDCCH.

As one embodiment, the behavior of monitoring a PDCCH targets a first RNTI set, and the first RNTI set comprises at least C-RNTI.

As one sub-embodiment of this embodiment, the first RNTI set does not comprise G-RNTI.

As one embodiment, the first node is not required to receive a signal of any cell in the first cell set in a time during which the any cell in the first cell set is in the first state.

As one embodiment, the first node is not required to receive dynamic scheduling of any cell in the first cell set in a time during which the any cell in the first cell set is in the first state.

As one embodiment, the first node is not subjected to dynamic scheduling of resources of any cell in the first cell set in a time during which the any cell in the first cell set is in the first state.

As one embodiment, the first node is not required to receive a first-type signal of any cell in the first cell set in a time during which the any cell in the first cell set is in the first state.

As one embodiment, the first-type signal comprises a signal on a PDCCH.

As one embodiment, the first-type signal comprises DCI with a format of 0_1 on a PDCCH.

As one embodiment, the first-type signal comprises DCI with a format of 1_0 on a PDCCH.

As one embodiment, the first-type signal comprises DCI with a format of 1_1 on a PDCCH.

As one embodiment, the first-type signal comprises a CSI-RS (channel status information reference signal).

As one embodiment, the first-type signal comprises a paging signal.

As one embodiment, the first-type signal comprises a system information block or certain SIB-type system information blocks.

As one embodiment, the first-type signal comprises a response to a random access signal.

As one embodiment, a time during which any cell in the first cell set is in the first state is an inactive time of the any cell in the first cell set.

As one embodiment, the behavior of monitoring a PDCCH includes attempting to blindly decode the PDCCH.

As one embodiment, the behavior of monitoring a PDCCH includes attempting to receive information on the PDCCH.

As one embodiment, the behavior of monitoring a PDCCH includes descrambling a signal on the PDCCH.

As one sub-embodiment of this embodiment, C-RNTI is used for the descrambling.

As one embodiment, the behavior of monitoring a PDCCH includes amplifying and/or equalizing a signal on the PDCCH.

As one embodiment, the behavior of monitoring a PDCCH includes filtering a signal on the PDCCH.

As one embodiment, the behavior of monitoring a PDCCH includes receiving a signal on a resource configured to the PDCCH, and processing the received signal.

As one embodiment, the behavior of monitoring a PDCCH includes receiving a signal on a resource configured to the PDCCH, and blindly decoding the received signal.

As one embodiment, the meaning of the sentence that the active time of the first DRX group only comprises a time during which at least one cell in the first cell set is not in the first state comprises: the active time of the first DRX group does not comprise a time outside the time during which at least one cell in the first cell set is not in the first state.

As one embodiment, the meaning of the sentence that the active time of the first DRX group only comprises a time during which at least one cell in the first cell set is not in the first state comprises: the active time of the first DRX group does not comprise a time during which all cells in the first cell set are in the first state.

As one embodiment, the first cell set comprises at least two cells.

As one embodiment, the second signaling respectively configures the first state of at least two cells in the first cell set.

As one embodiment, a time being not in the first state refers to a time outside the first state.

As one embodiment, a first time window set is a time during which any cell in the first cell set is in a first state, and a time during which the any cell in the first cell set is not in the first state refers to a time outside the first time window set.

As one embodiment, a time being not in the first state refers to a time between a moment when leaving the first state and a moment when entering the first state next time.

As one embodiment, the first timer is a timer related to DRX.

As one embodiment, the first timer targets the first DRX group.

As one embodiment, the first signaling is used for configuring a value of the first timer.

As one embodiment, the first signaling is used for configuring a start moment of the first timer.

As one embodiment, the first signaling is used for configuring an operation time of the first timer.

As one embodiment, the meaning of the sentence that the first timer only operates at a beginning of one DRX cycle comprises: the operation of the first timer defines one DRX cycle.

As one embodiment, the meaning of the sentence that the first timer only operates at a beginning of one DRX cycle comprises: the first timer operates once in one DRX cycle.

As one embodiment, the meaning of the sentence that the first timer only operates at a beginning of one DRX cycle comprises: each beginning of operation of the first timer is a beginning of one DRX cycle.

As one embodiment, the meaning of the sentence that the first timer only operates at a beginning of one DRX cycle comprises: the first timer is drx-onDurationTimer.

As one embodiment, the first timer is drx-onDurationTimer.

As one embodiment, the meaning of the sentence that an operation period of the first timer is used for determining the active time of the first DRX group is: the active time of the first DRX group comprises an intersection of a time during which at least one cell in the first cell set is not in the first state and the operation period of the first timer.

As one sub-embodiment of this embodiment, the active time of the first DRX group does not comprise a time during which each cell in the first cell set is in the first state in the operation period of the first timer.

As one sub-embodiment of this embodiment, the active time of the first DRX group comprises a time during which the first timer is operating and at least one cell in the first cell set is not in the first state.

As one embodiment, the meaning of the sentence that an operation period of the first timer is used for determining the active time of the first DRX group is: the active time of the first DRX group does not comprise a time during which each cell in the first cell set is in the first state in the operation period of the first timer.

As one sub-embodiment of this embodiment, the active time of the first DRX group comprises an intersection of a time during which at least one cell in the first cell set is not in the first state and the operation period of the first timer.

As one sub-embodiment of this embodiment, the active time of the first DRX group comprises a time during which the first timer is operating and at least one cell in the first cell set is not in the first state.

As one embodiment, the meaning of the sentence that an operation period of the first timer is used for determining the active time of the first DRX group is: under a condition that at least one cell in the first cell set is not in the first state, the active time of the first DRX group comprises the operation period of the first timer.

As one embodiment, the meaning of the sentence that an operation period of the first timer is used for determining the active time of the first DRX group is: under a condition that at least one cell in the first cell set is not in the first state, when the first timer operates, the first DRX group is in the active time.

As one embodiment, the dynamic scheduling includes indicating an uplink resource for transmission on a PDCCH.

As one sub-embodiment of this embodiment, indicating on a PDCCH is dynamic indicating.

As one embodiment, the dynamic scheduling includes indicating a downlink resource for reception on a PDCCH.

As one sub-embodiment of this embodiment, indicating on a PDCCH is dynamic indicating.

As one embodiment, a feature being in the first state includes that dynamic scheduling is not supported in the first state.

As one embodiment, a feature being in the first state includes that dynamic scheduling for this cell is not supported in the first state.

As one embodiment, a feature being in the first state includes that dynamic scheduling of resources of this cell is not supported in the first state.

As one embodiment, the second signaling comprises control signaling of a physical layer and/or a MAC layer.

As one embodiment, the second signaling is or comprises DCI and/or a MAC CE.

As one embodiment, the second signaling is used for indicating a third time window, and at least one cell in the first cell set enters the first state at the third time window.

As one sub-embodiment of this embodiment, the third time window is limited.

As one sub-embodiment of this embodiment, only one cell in the first cell set enters the first state at the third time window.

As one sub-embodiment of this embodiment, the second signaling indicates which cell in the first cell set enters the first state at the third time window.

As one sub-embodiment of this embodiment, the third time window is one of multiple time windows indicated by the second signaling, the multiple time windows respectively target multiple cells in the first cell set, and the multiple time windows are respectively used for indicating multiple cells in the first cell set to enter the first state.

As one embodiment, when the second signaling indicates only one time window for any cell in the first cell set, and the one time window is used for indicating that the any cell in the first cell set enters or is in the first state in the one time window, the second signaling is signaling of the RRC layer or below the RRC layer.

As one sub-embodiment of this embodiment, signaling below the RRC layer is DCI or a MAC CE.

As one embodiment, when the second signaling indicates multiple time windows for any cell in the first cell set, and the multiple time windows are used for indicating that the any cell in the first cell set enters or is in the first state at the multiple time windows, the second signaling is signaling of the RRC layer.

### Embodiment 2

Embodiment 2 illustrates a schematic diagram of one network architecture according to the present application, as shown in FIG. 2.

FIG. 2 illustrates a diagram of a network architecture 200 of 5G NR, LTE (Long-Term Evolution), and LTE-A (Long-Term Evolution Advanced) systems. The 5G NR or LTE network architecture 200 may be referred to as a 5GS (5G System)/EPS (Evolved Packet System)200 or some other suitable terms. The 5GS/EPS 200 may comprise one or more pieces of UE (User Equipment)201, an NG-RAN (next generation radio access network) 202, a 5GC (5G Core Network)/EPC (Evolved Packet Core) 210, an HSS (Home Subscriber Server)/UDM (Unified Data Management) 220, and an Internet service 230. The 5GS/EPS can be interconnected with other access networks, but these entities/interfaces are not shown for simplicity. As shown in the figure, the 5GS/EPS provides a packet switching service, however, those skilled in the art will readily understand that various concepts presented throughout the present application can be extended to networks or other cellular networks that provide circuit switching services. The NG-RAN comprises an NR Node B (gNB) 203 and other gNB204. The gNB203 provides user and control plane protocol terminations toward the UE201. The gNB203 may be connected to other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmitter/receiver point), or some other suitable terms. The gNB203 provides an access point to the 5GC/EPC210 for the UE201. Examples of the UE201 comprise cellular phones, smart phones, session Initiation Protocol (SIP) phones, laptops, personal digital assistants (PDAs), satellite radio, non-terrestrial base station communication, satellite mobile communication, global positioning systems, multimedia apparatuses, video apparatuses, digital audio players (e.g.,MP3 players), cameras, game consoles, drones, aircrafts, narrow-band Internet of Things devices, machine type communication devices, land vehicles, automobiles, wearable devices, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 by an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise Internet, intranet, IMS (IP Multimedia Subsystem) and packet switching streaming services.

As one embodiment, the first node in the present application is UE201.

As one embodiment, a base station of the second node in the present application is gNB203.

As one embodiment, a wireless link from the UE201 to an NR Node B is an uplink.

As one embodiment, a wireless link from an NR Node B to UE201 is a downlink.

As one embodiment, the UE201 supports relay transmission.

As one embodiment, the UE201 comprises a mobile phone.

As one embodiment, the UE201 is a transportation vehicle comprising an automobile.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is one flying platform device.

As one embodiment, the gNB203 is a satellite device.

### Embodiment 3

Embodiment 3 shows a schematic diagram of an embodiment of a radio protocol architecture of one user plane and one control plane according to the present application, as shown in FIG. 3. FIG. 3 is a schematic diagram illustrating an embodiment of a radio protocol architecture for a user plane 350 and a control plane 300. FIG. 3 presents a radio protocol architecture for the control plane 300, which is used between a first node (UE, a gNB, or a satellite or aircraft in NTN) and a second node (gNB, UE, or a satellite or aircraft in NTN), or between two pieces of UE, using three layers: Layer 1, Layer 2 and Layer 3. The Layer 1 (L1 layer) is the lowest layer and implements various PHY (physical layer) signal processing functions. The L1 layer will be referred to as PHY301 herein. The Layer 2 (L2 layer) 305 is above PHY301, and is responsible for links between the first node and the second node and between two pieces of UE through PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second node. The PDCP sublayer 304 provides a plurality of multiplexing between different radio bearers and logical channels. The PDCP sublayer 304 also provides security through data packet encryption, and provides cross-zone support to the first node between the second nodes. The RLC sublayer 303 provides segmentation and reassembly of upper layer data packets, retransmissions of lost data packets, and reordering of data packets to compensate for out-of-order reception due to HARQ. The MAC sublayer 302 provides a plurality of multiplexing between logical and transport channels. The MAC sublayer 302 is also responsible for allocating various radio resources (for example, resource blocks) in one cell among the first nodes. The MAC sublayer 302 is also responsible for HARQ operations. An RRC (Radio Resource Control) sublayer 306 in the Layer 3 (L3 layer) in the control plane 300 is responsible for obtaining radio resources (that is, radio bearers) and configuring a lower layer by using RRC signaling between the second node and the first node. A PC5-S (PC5 Signaling Protocol) sublayer 307 is responsible for processing a signaling protocol of a PC5 interface. The radio protocol architecture of the user plane 350 comprises the Layer 1 (L1 layer) and the Layer 2 (L2 layer). Regarding the radio protocol architecture used for the first node and the second node in the user plane 350, the physical layer 351, a PDCP sublayer 354 in the L2 layer 355, an RLC sublayer 353 in the L2 layer 355 and a MAC sublayer 352 in the L2 layer 355 are generally the same as corresponding layers and sublayers in the control plane 300, but the PDCP sublayer 354 also provides header compression for upper layer data packets to reduce radio transmission overhead. The L2 layer 355 in the user plane 350 further comprises an SDAP (Service Data Adaptation Protocol) sublayer 356, and the SDAP sublayer 356 is responsible for mapping between QoS streams and data radio bearers (DRBs) to support the diversity of services. The SRB can be regarded as a service or interface provided by the PDCP layer to higher layers, such as the RRC layer. In the NR system, the SRB comprises SRB1, SRB2, and SRB3, and when sidelink communication is involved, there is also SRB4, which are respectively used for transmitting different types of control signaling. The SRB is a bearer between the UE and the access network, and is used for transmitting control signaling including RRC signaling between the UE and the access network. The SRB1 has special significance for UE. After each UE establishes an RRC connection, there will be the SRB1, which is used for transmitting RRC signaling. Most of the signaling is transmitted through the SRB1. If the SRB1 is interrupted or cannot be used, the UE must perform RRC reconstruction. The SRB2 is generally only used for transmitting NAS signaling or security-related signaling. The UE may not be configured with the SRB3. Except for emergency services, the UE must establish an RRC connection with a network before subsequent communication. Although not shown in the figure, the first node may have several upper layers above the L2 layer 355. In addition, a network layer (for example, IP layer) terminating at a P-GW on a network side and an application layer terminating at another end (for example, remote UE, server, etc.) of connection are also comprised. For the UE involved in relay services, its control plane may also comprise an adaption sublayer SRAP (Sidelink Relay Adaptation Protocol) 308, and its user plane may also comprise an adaption sublayer SRAP358. The introduction of the adaption layer helps to multiplex and/or distinguish data from multiple pieces of source UE for lower layers, such as a MAC layer, such as an RLC layer. For nodes that do not involve relay communication, PC5-S307, SRAP308, and SRAP358 are not needed in a communication process.

As one embodiment, the radio protocol architecture in FIG. 3 is applicable to the first node in the present application.

As one embodiment, the radio protocol architecture in FIG. 3 is applicable to the second node in the present application.

As one embodiment, the first signaling in the present application is generated in the RRC306.

As one embodiment, the second signaling in the present application is generated in the RRC306 or MAC302 or PHY301.

As one embodiment, the third signaling in the present application is generated in the MAC302 or the PHY301.

As one embodiment, the first signal in the present application is generated in the PHY301.

### Embodiment 4

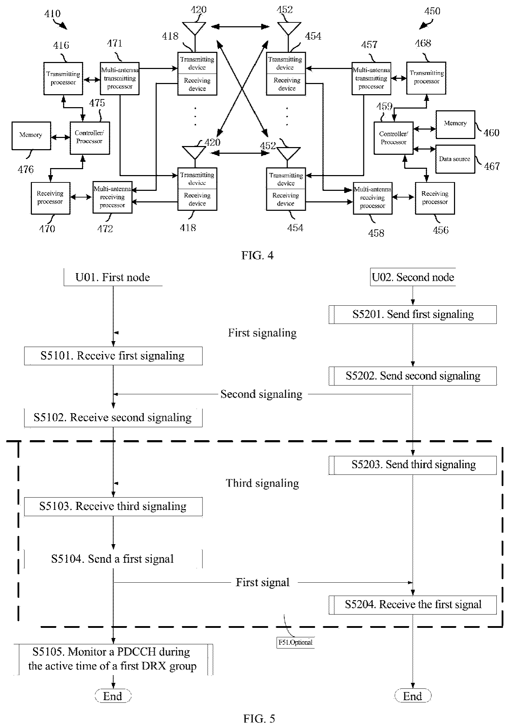

Embodiment 4 shows a schematic diagram of a first communication device and a second communication device according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, and a receiving processor 456, and optionally, may also comprise a multi-antenna transmitting processor 457, a multi-antenna receiving processor 458, a transmitting device/receiving device 454, and an antenna 452.

The second communication device 410 comprises a controller/processor 475, a memory 476, a receiving processor 470, and a transmitting processor 416, and optionally, may also comprise a multi-antenna receiving processor 472, a multi-antenna transmitting processor 471, a transmitting device/receiving device 418, and an antenna 420.

In the transmission from the second communication device 410 to the first communication device 450, at the second communication device 410, an upper layer data packet from a core network is provided to the controller/processor 475. The controller/processor 475 implements the functionality of the L2 (Layer-2) layer. In the transmission from the second communication device 410 to the first communication device 450, the controller/processor 475 provides header compression, encryption, packet segmentation and reordering, multiplexing between logical and transport channels, and radio resource allocation for the first communication device 450 based on various priority metrics. The controller/processor 475 is also responsible for retransmissions of lost packets, and for signaling to the first communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 410, as well as mapping of signal clusters based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding of coded and modulated symbols, comprising codebook-based precoding and non-codebook-based precoding, and beamforming processing, to generate one or more spatial streams. The transmitting processor 416 then maps each spatial stream to a subcarrier, which is multiplexed with a reference signal (for example, a pilot) in a time domain and/or frequency domain, and subsequently an inverse fast Fourier transform (IFFT) is used to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts the baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier and converts a radio frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream after the receiving analog precoding/beamforming operations from a time domain to a frequency domain. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. Then, the receiving processor 456 decodes and deinterleaves the soft decisions to recover the upper layer data and control signals transmitted by the second communication device 410 on the physical channel. The upper layer data and control signals are then provided to the controller/processor 459. The controller/processor 459 implements functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, control signal processing to recover the upper layer data packets from the core network. The upper layer data packets are then provided to all protocol layers above the L2 layer. Various control signals may also be provided to L3 for L3 processing.

In the transmission from the first communication device 450 to the second communication device 410, at the first communication device 450, a data source 467 is used to provide an upper layer data packet to the controller/processor 459. The data source 467 represents all protocol layers above the L2 layer. Similar to a sending function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for retransmissions of lost packets, and for signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Subsequently, the transmitting processor 468 modulates the generated spatial stream into a multi-carrier/single-carrier symbol stream, which undergoes analog precoding/beamforming operations in the multi-antenna transmitting processor 457 and is then provided to different antennas 452 via the transmitting device 454. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, a function at the second communication device 410 is similar to a receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper layer data packets from the UE450. The upper layer data packets from the controller/processor 475 may be provided to the core network.

As one embodiment, the first communication device 450 apparatus comprises: at least one processor and at least one memory, wherein the at least one memory comprises a computer program code; the at least one memory and the computer program code are configured to be used together with the at least one processor, and the first communication device 450 apparatus at least: first receives first signaling and second signaling, wherein the first signaling is used for configuring a first DRX group; the first DRX group comprises a first cell set; and the second signaling is used for configuring a first state of at least one cell in the first cell set; and monitoring a PDCCH during an active time of the first DRX group, wherein the active time of the first DRX group only comprises a time during which at least one cell in the first cell set is not in the first state, wherein the first signaling is used for configuring a first timer, and an operation period of the first timer is used for determining the active time of the first DRX group; and the first timer only operates at a beginning of one DRX cycle.

As one embodiment, the first communication device 450 comprises: a memory storing a computer-readable instruction program, the computer-readable instruction program generates an action when executed by at least one processor, and the action comprises: receiving first signaling and second signaling, wherein the first signaling is used for configuring a first DRX group; the first DRX group comprises a first cell set; and the second signaling is used for configuring a first state of at least one cell in the first cell set; and monitoring a PDCCH during an active time of the first DRX group, wherein the active time of the first DRX group only comprises a time during which at least one cell in the first cell set is not in the first state, wherein the first signaling is used for configuring a first timer, and an operation period of the first timer is used for determining the active time of the first DRX group; and the first timer only operates at a beginning of one DRX cycle.

As one embodiment, the second communication device 410 apparatus comprises: at least one processor and at least one memory, wherein the at least one memory comprises a computer program code; the at least one memory and the computer program code are configured to be used together with the at least one processor, and the second communication device 410 at least: sends first signaling and second signaling, wherein the first signaling is used for configuring a first DRX group; the first DRX group comprises a first cell set; and the second signaling is used for configuring a first state of at least one cell in the first cell set; a recipient of the first signaling monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

As one embodiment, the second communication device 410 comprises: a memory storing a computer-readable instruction program, the computer-readable instruction program generates an action when executed by at least one processor, and the action comprises: sending first signaling and second signaling, wherein the first signaling is used for configuring a first DRX group; the first DRX group comprises a first cell set; the second signaling is used for configuring a first state of at least one cell in the first cell set; a recipient of the first signaling monitors a PDCCH during an active time of the first DRX group; the active time of the first DRX group only comprises a time during which at least one cell in the first cell set is not in the first state, wherein the first signaling is used for configuring a first timer, and an operation period of the first timer is used for determining the active time of the first DRX group; and the first timer only operates at a beginning of one DRX cycle.

As one embodiment, the first communication device 450 corresponds to the first node in the present application.

As one embodiment, the second communication device 410 corresponds to the second node in the present application.

As one embodiment, the first communication device 450 is one piece of UE.

As one embodiment, the first communication device 450 is one vehicle-mounted terminal.

As one embodiment, the second communication device 450 is one relay.

As one embodiment, the second communication device 410 is one satellite.

As one embodiment, the second communication device 410 is one aircraft.

As one embodiment, the second communication device 410 is one base station.

As one embodiment, the receiving device 454 (comprising the antenna 452), the receiving processor 456, and the controller/processor 459 are used for receiving the first signaling in the present application.

As one embodiment, the receiving device 454 (comprising the antenna 452), the receiving processor 456, and the controller/processor 459 are used for receiving the second signaling in the present application.

As one embodiment, the receiving device 454 (comprising the antenna 452), the receiving processor 456, and the controller/processor 459 are used for receiving third signaling in the present application.

As one embodiment, the transmitting device 454 (comprising the antenna 452), the transmitting processor 468, and the controller/processor 459 are used for sending the first signal in the present application.

As one embodiment, the transmitting device 418 (comprising the antenna 420), the transmitting processor 416, and the controller/processor 475 are used for sending the first signaling in the present application.

As one embodiment, the transmitting device 418 (comprising the antenna 420), the transmitting processor 416, and the controller/processor 475 are used for sending the second signaling in the present application.

As one embodiment, the transmitting device 418 (comprising the antenna 420), the transmitting processor 416, and the controller/processor 475 are used for sending the third signaling in the present application.

As one embodiment, the receiving device 418 (comprising the antenna 420), the receiving processor 470, and the controller/processor 475 are used for receiving the first signal in the present application.

### Embodiment 5

Embodiment 5 illustrates a flowchart of wireless signal transmission according to one embodiment of the present application, as shown in FIG. 5. In FIG. 5, U01 corresponds to a first node of the present application, U02 corresponds to a second node of the present application, and it is particularly noted that the order in this example does not limit the order of signal transmission and the order of implementation in the present application, wherein steps in F51 are optional.

For **the first node U01,** in step S5101, first signaling is received; in step S5102, second signaling is received; in step S5103, third signaling is received; in step S5104, a first signal is sent; and in step S5105, a PDCCH is monitored during an active time of a first DRX group.

For **the second node U02,** in step S5201, first signaling is sent; in step S5202, second signaling is sent; in step S5203, third signaling is sent; and in step S5204, a first signal is received.

In Embodiment 5, the first signaling is used for configuring a first DRX group; the first DRX group comprises a first cell set; the second signaling is used for configuring a first state of at least one cell in the first cell set; the active time of the first DRX group only comprises a time during which at least one cell in the first cell set is not in the first state; the first signaling is used for configuring a first timer, and an operation period of the first timer is used for determining the active time of the first DRX group; and the first timer only operates at a beginning of one DRX cycle.

As one embodiment, the second node U02 is a serving cell of the first node U01 or a base station corresponding to the serving cell.

As one embodiment, the second node U02 is a PCell of the first node U01 or a base station corresponding to the PCell.

As one embodiment, the second node U02 is an MN of the first node U01.

As one embodiment, a communication interface between the first node U01 and the second node U02 is a Uu interface.

As one embodiment, the first signaling is sent before the second signaling.

As one embodiment, the first signaling is sent after the second signaling.

As one embodiment, the first signaling are the second signaling are together sent.

As one embodiment, the step S5203 is after the step S5202.

As one embodiment, the step S5104 is after the step S5102.

As one embodiment, the step S5105 is after the step S5101.

As one embodiment, the second node U02 is used for configuring a PDCCH monitored by the first node during an active time of the first DRX group.

As one embodiment, the second signaling is or comprises a system information block.

As one embodiment, the second signaling is or comprises a system information block 1.

As one embodiment, the second signaling is sent through a system information block.

As one embodiment, the first signaling is sent through an SRB (signaling radio bearer).

As one embodiment, the second signaling is sent through an SRB (signaling radio bearer).

As one embodiment, the SRB is an SRB between the first node U01 and the second node U02.

As one embodiment, the SRB is an SRB between the first node U01 and a network.

As one embodiment, the SRB is an SRB between the first node U01 and an MCG.

As one embodiment, the first node U01 stops the first timer as a response to all cells in the first cell set being in the first state.

As one embodiment, the first node U01 stops the second timer as a response to all cells in the first cell set being in the first state.

As one embodiment, the first node U01 stops at least the latter of the first timer and the second timer as a response to all cells in the first cell set being in the first state.

As one embodiment, when all cells in the first cell set are in the first state, the first node U01 stops at least the latter of the first timer and the second timer.

As one embodiment, an operation period of the second timer is a maximum duration until one downlink retransmission is received, and the operation period of the second timer is used for determining the active time of the first DRX group.

As one embodiment, the meaning of the sentence that an operation period of the second timer is the maximum duration until one downlink retransmission is received is: the first node U01 expects a next retransmission in the operation period of the second timer, and after the second timer expires, the first node U01 no longer expects the next retransmission.

As one embodiment, the meaning of the sentence that an operation period of the second timer is the maximum duration until one downlink retransmission is received is: the operation period of the second timer is the longest time during which the first node U01 can expect a next retransmission.

As one embodiment, the second timer is one DRX timer.

As one embodiment, the first signaling is used for configuring the second timer.

As one embodiment, the second timer is a DRX retransmission timer.

As one embodiment, the second timer is a DRX downlink retransmission timer.

As one embodiment, the second timer is drx-RetransmissionTimerDL.

As one embodiment, the meaning of the sentence that an operation period of the second timer is used for determining the active time of the first DRX group comprises: when at least one cell in the first cell set is not in the first state, the active time of the first DRX group comprises the operation period of the second timer.

As one embodiment, the meaning of the sentence that an operation period of the second timer is used for determining the active time of the first DRX group comprises: when all cells in the first cell set are in the first state, the active time of the first DRX group does not comprise the operation period of the second timer.

As one embodiment, the meaning of the sentence that an operation period of the second timer is used for determining the active time of the first DRX group comprises: an intersection of a time during which at least one cell in the first cell set is not in the first state and the operation period of the second timer belongs to the active time of the first DRX group.

As one embodiment, the first node U01 stops at least the latter of the first timer and the third timer as a response to all cells in the first cell set being in the first state.

As one embodiment, the first node U01 stops the first timer as a response to all cells in the first cell set being in the first state.

As one embodiment, the first node U01 stops the third timer as a response to all cells in the first cell set being in the first state.

As one embodiment, the first node U01 stops one of the second timer or the third timer as a response to all cells in the first cell set being in the first state.

As one embodiment, the second timer and the third timer target the same HARQ process.

As one embodiment, the expiration of the second timer triggers the beginning of the third timer.

As one embodiment, the active time of the first DRX group does not comprise an operation period of the third timer.

As one embodiment, an operation period of the third timer is the shortest time to downlink allocation for HARQ retransmissions expected by a MAC entity of the first node U01.

As one embodiment, in an operation period of the third timer, HARQ retransmissions expected by a MAC entity of the first node U01 are not received.

As one embodiment, downlink allocation of HARQ retransmissions expected by a MAC entity of the first node U01 will only occur after the third timer expires.

As one embodiment, after the first node U01 sends a HARQ NACK, a MAC entity of the first node U01 will expect HARQ retransmissions.

As one embodiment, after the first node U01 sends a HARQ NACK, a MAC entity of the first node U01 will expect downlink allocation of HARQ retransmissions.

As one embodiment, the downlink allocation of the HARQ retransmissions is a downlink resource allocated for the HARQ retransmissions.

As one embodiment, the third timer is a DRX timer.

As one embodiment, the third timer is a HARQ timer of DRX.

As one embodiment, the third timer is drx-HARQ-RTT-TimerDL.

As one embodiment, as a response to receiving new transmission of the first DRX group, the first node U01 starts a fourth timer.

As one embodiment, the fourth timer indicates a time after a new uplink or downlink transmission PDCCH occasion for a MAC entity.

As one embodiment, an operation period of the fourth timer is used for determining the active time of the first DRX group.

As one embodiment, an intersection of an operation period of the fourth timer and a time during which at least one cell in the first cell set is not in the first state belongs to the active time of the first DRX group.

As one embodiment, a time during which all cells in the first cell set are in the first state in the operation period of the fourth timer does not belong to the active time of the first DRX group.

As one embodiment, when all cells in the first cell set are in the first state, the active time of the first DRX group does not comprise the operation period of the fourth timer.

As one embodiment, an active time of the first DRX group only comprises an operation period of the fourth timer when at least one cell in the first cell set is not in the first state.

As one embodiment, the fourth timer is a DRX timer.

As one embodiment, the fourth timer is an inactive timer of DRX.

As one embodiment, the fourth timer is drx-InactivityTimer.

As one embodiment, the first signaling is used for configuring the fourth timer.

As one embodiment, the first signaling is used for configuring the second timer and the third timer.

As one embodiment, configuring one timer includes configuring a value of the timer.

As one embodiment, the first node U01 stops the fourth timer as a response to all cells in the first cell set being in the first state.

As one embodiment, the first signal is sent on a PUCCH (physical uplink control channel).

As one embodiment, the first signal is sent only when at least one cell in the first cell set is not in the first state.

As one embodiment, the first signal is sent only when a cell to which a resource occupied by the PUCCH belongs is not in the first state.

As one embodiment, a PUCCH occupied by the first signal is configured for a first PUCCH cell, and the first signal is sent only when the first PUCCH cell is not in the first state.

As one embodiment, the first signal is a signal of a physical layer.

As one embodiment, the first signal is UCI (Uplink Control Information).

As one embodiment, the first signal is used for requesting scheduling.

As one embodiment, the first signal is an SR (scheduling request).

As one embodiment, the first signal indicates a scheduling request.

As one embodiment, the time during which the first signal waits for processing after being sent is a time during which a scheduling request process that triggers the first signal is not canceled after the first signal is sent.

As one embodiment, the time during which the first signal waits for processing after being sent is a time between a moment after the first signal is sent and a moment when a scheduling request process that triggers the first signal is canceled.

As one embodiment, the time during which the first signal waits for processing after being sent is a time during which a corresponding scheduling request is not canceled after the first signal is sent.

As one embodiment, the time during which the first signal waits for processing after being sent is a time between a moment after the first signal is sent and a moment when a corresponding scheduling request is canceled.

As one embodiment, the time during which the first signal waits for processing after being sent is a time during which a scheduling request of the first signal is in a pending state.

As one embodiment, the time during which the first signal waits for processing after being sent is a time during which a scheduling request that triggers the first signal is in a pending state.

As one embodiment, the time during which the first signal waits for processing after being sent is a time between a moment after the first signal is sent and a moment when sufficient uplink resource scheduling is received.

As one embodiment, sufficient uplink resource scheduling is received to trigger a cancel scheduling request.

As one embodiment, the scheduling request may be re-sent when sufficient uplink resource scheduling is not received.

As one embodiment, when at least one cell in the first cell set is not in the first state, the active time of the first DRX group comprises a time during which the first signal waits for processing after being sent.

As one embodiment, when all cells in the first cell set are in the first state, the active time of the first DRX group does not comprise the time during which the first signal waits for processing after being sent.

As one embodiment, the active time of the first DRX group comprises the time during which the first signal waits for processing after being sent in a time during which at least one cell in the first cell set is not in the first state.

As one embodiment, the third signaling is DCI (downlink control information).

As one sub-embodiment of this embodiment, the third signaling is signaling of a physical layer.

As one embodiment, the third signaling is a MAC CE (Control Element).

As one sub-embodiment of this embodiment, the third signaling is signaling of a MAC layer.

As one embodiment, the meaning of the sentence that the third signaling is used for activating at least one cell in the first cell set applying the first state comprises: the first signaling configures a beginning time and a time length of a first state of at least one cell in the first cell set but does not indicate the at least one cell in the first cell set applying the first state, and the third signaling is used for indicating the at least one cell in the first cell set applying the first state.

As one embodiment, by default, cells in the first cell set are configured with a first state, that is, the first state can be applied.

As one embodiment, the meaning of the sentence that the third signaling is used for activating at least one cell in the first cell set applying the first state comprises: the second signaling is used for configuring at least one time window, and when at least one cell in the first cell set is activated to apply the first state, the at least one cell in the first cell set applies the first state in the at least one time window.

As one sub-embodiment of this embodiment, the second signaling indicates that at least one cell in the first cell set is activated to apply the first state.

As one sub-embodiment of this embodiment, the second signaling indicates that at least one cell in the first cell set is not activated to apply the first state.

As one embodiment, the meaning of the sentence that the third signaling is used for activating at least one cell in the first cell set applying the first state comprises: the second signaling is used for configuring at least one time window, and the first state is to be applied within an activated time window when at least one cell in the first cell set applies the first state, and the third signaling is used for activating the at least one time window.

As one sub-embodiment of this embodiment, the second signaling indicates that the at least one time window is not activated.

As one embodiment, the meaning of the phrase of applying the first state comprises: entering the first state.

As one embodiment, the meaning of the phrase of applying the first state comprises: entering the first state after a configured condition is met.

As one sub-embodiment of this embodiment, the condition comprises: within a specific time.

As one embodiment, the meaning of the phrase of applying the first state comprises: using the first state.

As one embodiment, the meaning of the phrase of applying the first state comprises: entering the first state within a configured time window.

### Embodiment 6

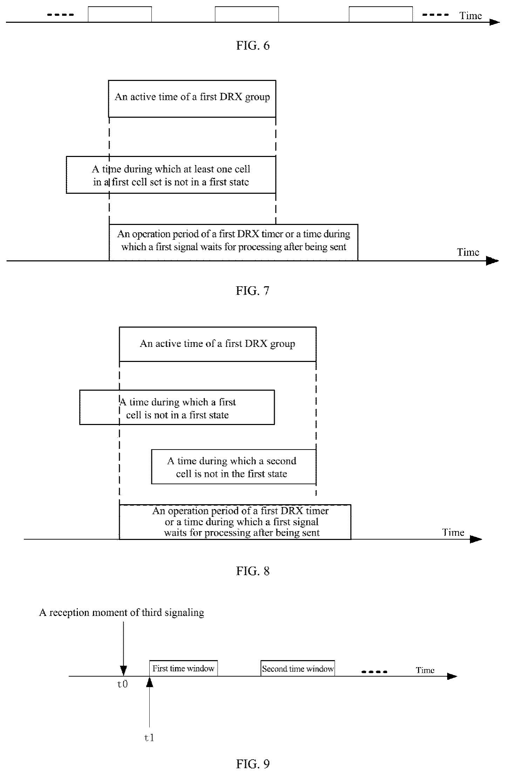

Embodiment 6 illustrates a schematic diagram showing that any cell in a first cell set is in a first state according to one embodiment of the present application, as shown in FIG. 6.

In FIG. 6, each rectangle illustrates the time during which any cell in the first cell set is in the first state; a time outside the rectangle indicates a time during which the any cell in the first cell set is not in the first state; a method proposed in the present application does not limit the number of time periods in which any cell in the first cell set is continuously in the first state, namely, the number of rectangles in FIG. 6 is not limited; and a dotted line indicates that there may be more time windows.

As one embodiment, the second signaling indicates at least one time window.

As one sub-embodiment of this embodiment, each time window in the at least one time window is represented by one rectangle in FIG. 6.

As one embodiment, the second signaling indicates the number of the at least one time window.

As one embodiment, the second signaling indicates the length of each time window in the at least one time window.

As one embodiment, the second signaling indicates a time interval between two adjacent time windows in the at least one time window.

As one embodiment, time intervals between two adjacent time windows in the at least one time window are equal.

As one embodiment, a time interval between two adjacent time windows in the at least one time window is a first time interval, a time interval between other two adjacent time windows is a second time interval, and the first time interval is not equal to the second time interval.

As one embodiment, the length of each time window in the at least one time window is equal.

As one embodiment, the at least one time window comprises two time windows unequal in length.

As one embodiment, the beginning of a time window in the at least one time window is related to the transmission time of a system information block.

As one embodiment, the beginning of a time window in the at least one time window is related to the transmission time of a system information block 1.

As one embodiment, the beginning of a time window in the at least one time window is related to the transmission time of a main system information block.

As one embodiment, a time window in the at least one time window is periodic.

As one embodiment, the second signaling indicates a cycle of the at least one time window.

As one embodiment, any two adjacent time windows in the at least one time window set are non-consecutive in a time domain.

As one embodiment, the length of any time window in the at least one time window is limited.

As one embodiment, any time window in the at least one time window comprises N1 slots.

As one embodiment, any time window in the at least one time window comprises N2 subframes.

As one embodiment, any time window in the at least one time window comprises N3 frames.

As one embodiment, any time window in the at least one time window comprises N4 milliseconds.

As one embodiment, the N1, the N2, the N3, and the N4 are positive integers.

As one embodiment, the second signaling indicates one of the N1, the N2, the N3, and the N4.

As one embodiment, if one cell in the first cell set enters any time window in the at least one time window, the one cell in the first cell set enters the first state; and if the one cell in the first cell set leaves any time window in the at least one time window, the one cell in the first cell set leaves the first state.

As one embodiment, the at least one time window targets all cells in the first cell set.

As one embodiment, the at least one time window targets one cell in the first cell set.

As one embodiment, the at least one time window targets partial cells in the first cell set.

As one embodiment, the at least one time window targets a first cell in the first cell set; "The second signaling comprises another time window" targets a second cell in the first cell set.

As one sub-embodiment of this embodiment, the another time window and the at least one time window do not overlap in time.

As one sub-embodiment of this embodiment, the another time window and the at least one time window do not completely overlap in time.

As one sub-embodiment of this embodiment, the another time window and the at least one time window only partially overlap in time.

As one embodiment, the at least one time window targets any cell in the first cell set.

As one embodiment, the transmission time of an SIB1 is used for determining the at least one time window.

### Embodiment 7

Embodiment 7 illustrates a schematic diagram of an active time of a first DRX group according to one embodiment of the present application, as shown in FIG. 7.

FIG. 7 shows how to determine the active time of the first DRX group.

As one embodiment, a time during which at least one cell in the first cell set is not in the first state is limited.

As one embodiment, a method proposed in the present application does not limit when a time during which at least one cell in the first cell set is not in the first state begins and ends.

As one embodiment, the beginning of the time during which at least one cell in the first cell set is not in the first state is the same as the beginning of the first DRX timer.

As one embodiment, the beginning of the time during which at least one cell in the first cell set is not in the first state is different from the beginning of the first DRX timer.

As one embodiment, the beginning of the time during which at least one cell in the first cell set is not in the first state is earlier than the beginning of the first DRX timer by a first time offset.

As one sub-embodiment of this embodiment, the first signaling is used for configuring the first time offset.

As one embodiment, a time outside the time during which at least one cell in the first cell set in FIG. 6 is not in the first state is a time during which all cells in the first cell set are in the first state.

As one embodiment, the time during which at least one cell in the first cell set is not in the first state may also comprise, in addition to a time in a rectangle shown in FIG. 6, other time periods discontinuous with the time during which at least one cell in the first cell set is not in the first state in FIG. 6, and the other time periods do not overlap with one operation period of the first DRX timer.

As one embodiment, the time during which at least one cell in the first cell set is not in the first state may also comprise, in addition to a time in a rectangle shown in FIG. 6, may also comprise other time periods discontinuous with the time during which at least one cell in the first cell set is not in the first state in FIG. 6, and the other time periods do not overlap with the time during which the first signal waits for processing after being sent.

As one embodiment, the operation period of the first DRX timer in FIG. 6 refers to a period of one operation.

As one embodiment, the first DRX timer comprises the first timer.

As one embodiment, the first DRX timer comprises the second timer.

As one embodiment, the first timer comprises the fourth timer.

As one embodiment, the time during which the first signal waits for processing after being sent does not limit the length of time.

As one embodiment, the time during which the first signal waits for processing after being sent is limited, and is related to the maximum number of retransmissions of a scheduling request.

As one embodiment, FIG. 7 is used for illustrating that the active time of the first DRX group is jointly determined by the time during which at least one cell in the first cell set is not in the first state and the operation period of the first DRX timer.

As one embodiment, FIG. 7 is used for illustrating that the active time of the first DRX group is determined jointly by the time during which at least one cell in the first cell set is not in the first state and the time during which the first signal waits for processing after being sent.

As one embodiment, an oblique line rectangle of FIG. 7 is a union set of the operation period of the first DRX timer and the time during which the first signal waits for processing after being sent.

As one embodiment, the first node needs to monitor a PDCCH during the active time of the first DRX group.

As one embodiment, it is not required whether the first node monitors a PDCCH during a time other than the active time of the first DRX group.

As one embodiment, whether the first node monitors a PDCCH during a time other than the active time of the first DRX group is determined by an internal algorithm of the first node.

As one sub-embodiment of this embodiment, if power saving is to be maximized, the first node does not monitor a PDCCH during a time other than the active time of the first DRX group.

As one sub-embodiment of this embodiment, if performance is to be guaranteed to the greatest extent, for example, accuracy of measurements is guaranteed and the shortest delay of communication is guaranteed, the first node may continue to monitor the PDCCH during a time other than the active time of the first DRX group.

### Embodiment 8

Embodiment 8 illustrates a schematic diagram of an active time of a first DRX group according to one embodiment of the present application, as shown in FIG. 8, and Embodiment 8 is based on Embodiment 7.

As one embodiment, the first cell is any cell in the first cell set.

As one embodiment, the second cell is any cell other than the first cell in the first cell set.

As one embodiment, the first cell set may also comprise a cell other than the first cell and the second cell.

As one embodiment, the first cell and the second cell belong to the first DRX group.

As one embodiment, the first cell and the second cell belong to the same cell group.

As one embodiment, the first cell and the second cell belong to an MCG.

As one embodiment, the first cell and the second cell respectively belong to an MCG and an SCG.

As one embodiment, a time other than a time during which the first cell is not in the first state in FIG. 8 comprises a time during which the first cell is in the first state.

As one embodiment, there may be other time periods during which the first cell is not in the first state, and the other time periods and an operation period of the first DRX timer have no intersection.

As one embodiment, there may be other time periods during which the first cell is not in the first state, and the other time periods and the time during which the first signal waits for processing after being sent have no intersection.

As one embodiment, there may be other time periods during which the second cell is not in the first state, and the other time periods and the operation period of the first DRX timer have no intersection.

As one embodiment, there may be other time periods during which the second cell is not in the first state, and the other time periods and the time during which the first signal waits for processing after being sent have no intersection.

As one embodiment, as shown in FIG. 8, the active time of the first DRX group depends on a time during which either cell in the first cell and the second cell is not in the first state.

As one embodiment, as shown in FIG. 8, the active time of the first DRX group depends on the time during which either of the first cell and the second cell is not in the first state and the operation period of the first DRX timer.

As one embodiment, as shown in FIG. 8, the active time of the first DRX group depends on the time during which either of the first cell and the second cell is not in the first state and the time during which the first signal waits for processing after being sent.

As one embodiment, the time during which the first cell is not in the first state and the time during which the second cell is not in the first state may have no intersection.

As one embodiment, the time during which the first cell is not in the first state and the time during which the second cell is not in the first state may partially overlap.

As one embodiment, the time during which the first cell is not in the first state and the time during which the second cell is not in the first state may be the same.

As one embodiment, a method proposed in the present application does not limit the time during which a cell in the first cell set is in the first state.

As one embodiment, under an assumption that it is not considered whether at least one cell not in the first state is present in the first cell set, the active time of the first DRX group comprises the operation period of the first DRX timer.

As one embodiment, under an assumption that it is not considered whether at least one cell not in the first state is present in the first cell set, the active time of the first DRX group comprises the time during which the first signal waits for processing after being sent.

As one embodiment, using the method proposed by the present application, the active time of the first DRX group can be shorter and will not affect the reception performance, so more power can be saved under a premise of ensuring performance.

### Embodiment 9

Embodiment 9 illustrates a schematic diagram of a reception moment of third signaling and a time during which a first cell is in a first state according to one embodiment of the present application, as shown in FIG. 9.

In FIG. 9, the third signaling is received at a t0 moment.

As one embodiment, the second signaling indicates at least one time window, and the at least one time window is used for determining a time during which the first node applies the first state.

As one sub-embodiment of this embodiment, the first time window and the second time window belong to the at least one time window.

As one embodiment, the first time window and the second time window are any two time windows used for determining that the first node is in the first state.

As one embodiment, the second signaling configures at least the first time window and the second time window.

As one sub-embodiment of this embodiment, when the first node applying the first state is activated, the first node is in the first state in the first time window and the second time window.

As one sub-embodiment of this embodiment, the second signaling does not activate the first node applying the first state.

As one sub-embodiment of this embodiment, after the first time window and the second time window are activated, the first node is in the first state in the first time window and the second time window.

As one sub-embodiment of this embodiment, the second signaling does not activate the first time window and the second time window.

As one sub-embodiment of this embodiment, when the first time window is not activated, the first node is not in the first state in the first time window.

As one sub-embodiment of this embodiment, when the second time window is not activated, the first node is not in the first state in the second time window.

As one sub-embodiment of this embodiment, when the first node applying the first state is not activated, the first node is not in the first state in the first time window and the second time window.

As one sub-embodiment of this embodiment, by default, the second signaling activates the first node applying the first state.

As one sub-embodiment of this embodiment, the second signaling activates the first time window and the second time window.

As one embodiment, the third signaling is used for activating the first node applying the first state.

As one sub-embodiment of this embodiment, the third signaling implements activating the first node applying the first state by activating the first time window and the second time window.

As one embodiment, the first time window begins at a t1 moment.

As one embodiment, when a time interval between t0 and t1 is greater than 4 ms, after the third signaling is received, the first time window and the second time window are both activated.

As one embodiment, when a time interval between t0 and t1 is smaller than 4 ms, after the third signaling is received, only the latter of the first time window and the second time window is activated.

### Embodiment 10

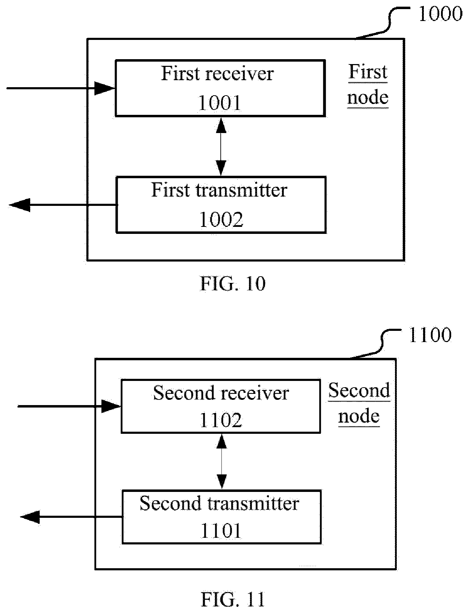

Embodiment 10 illustrates a structural block diagram of a processing apparatus used in a first node according to one embodiment of the present application, as shown in FIG. 10.

In FIG. 10, a processing apparatus 1000 in the first node comprises a first receiver 1001 and a first transmitter 1002. In Embodiment 10, the first receiver 1001 receives first signaling and second signaling, and the first signaling is used for configuring a first DRX (Discontinuous Reception) group; the first DRX group comprises a first cell set; the second signaling is used for configuring a first state of at least one cell in the first cell set;
the first receiver 1001 monitors a PDCCH (Physical Downlink Control Channel) during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

As one embodiment, the feature of one cell in the first state includes that the one cell turns off data transmission based on dynamic scheduling.

As one embodiment, the meaning of the sentence that an operation period of the first timer is used for determining the active time of the first DRX group is: the active time of the first DRX group comprises an intersection of the time during which at least one cell in the first cell set is not in the first state and the operation period of the first timer; and the active time of the first DRX group does not comprise a time during which each cell in the first cell set is in the first state in the operation period of the first timer.

As one embodiment, the first transmitter 1002 sends a first signal on a PUCCH, the first signal being used for requesting scheduling,
wherein the active time of the first DRX group comprises an intersection of a time during which at least one cell in the first cell set is not in the first state and a time during which the first signal waits for processing after being sent; and the active time of the first DRX group does not comprise a time outside the time during which at least one cell in the first cell set is not in the first state in the time during which the first signal waits for processing after being sent.

As one embodiment, the first receiver 1001 stops at least the latter of the first timer and a second timer as a response to all cells in the first cell set being in the first state,
wherein an operation period of the second timer is the maximum duration until one downlink retransmission is received, and the operation period of the second timer is used for determining the active time of the first DRX group.

As one embodiment, the first receiver 1001 stops at least the latter of the first timer and a third timer as a response to all cells in the first cell set being in the first state,
wherein an operation period of the third timer is the shortest time to downlink allocation for HARQ retransmissions expected by a MAC entity of the first node.

As one embodiment, the first receiver 1001 receives third signaling; the third signaling is used for activating at least one cell in the first cell set applying the first state; and as a response to receiving the third signaling, the first timer is stopped.

As one embodiment, the time during which the at least one cell in the first cell set enters the first state is related to the reception time of the third signaling, and when the third signaling is received 4 ms before the at least one cell in the first cell set leaving the first state, the any cell in the first cell set applying the first state is immediately activated; and when the third signaling is received within 4 ms of the at least one cell in the first cell set leaving the first state, the any cell in the first cell set applying the first state is not immediately activated.

As one embodiment, the first node is one piece of user equipment (UE).

As one embodiment, the first node is one terminal that supports NTN.

As one embodiment, the first node is one aircraft or ship.

As one embodiment, the first node is one mobile phone or vehicle-mounted terminal.

As one embodiment, the first node is one relay UE and/or U2N remote UE.

As one embodiment, the first node is one Internet of Things terminal or Industrial Internet of Things terminal.

As one embodiment, the first node is one device that supports low-delay and high-reliability transmission.

As one embodiment, the first receiver 1001 comprises at least one of the antenna 452, the receiving device 454, the receiving processor 456, the multi-antenna receiving processor 458, the controller/processor 459, the memory 460, or the data source 467 in Embodiment 4.

As one embodiment, the first transmitter 1002 comprises at least one of the antenna 452, the transmitting device 454, the transmitting processor 468, the multi-antenna transmitting processor 457, the controller/processor 459, the memory 460, or the data source 467 in Embodiment 4.

### Embodiment 11

Embodiment 11 illustrates a structural block diagram of a processing apparatus used in a second node according to one embodiment of the present application; as shown in FIG. 11. In FIG. 11, a processing apparatus 1100 in the second node comprises a second transmitter 1101 and a second receiver 1102. In Embodiment 11,
the second transmitter 1101 sends first signaling and second signaling, wherein the first signaling is used for configuring a first DRX group; the first DRX group comprises a first cell set; the second signaling is used for configuring a first state of at least one cell in the first cell set;
a recipient of the first signaling monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

As one embodiment, a feature of one cell being in the first state includes that the one cell turns off data transmission based on dynamic scheduling.

As one embodiment, the meaning of the sentence that an operation period of the first timer is used for determining the active time of the first DRX group is:
the active time of the first DRX group comprises an intersection of the time during which at least one cell in the first cell set is not in the first state and an operation period of the first timer; and the active time of the first DRX group does not comprise a time during which each cell in the first cell set is in the first state in the operation period of the first timer.

As one embodiment, the second receiver 1102 receives a first signal on a PUCCH, the first signal being used for requesting scheduling,
wherein the active time of the first DRX group comprises an intersection of a time during which at least one cell in the first cell set is not in the first state and a time during which the first signal waits for processing after being sent; and the active time of the first DRX group does not comprise a time outside the time during which at least one cell in the first cell set is not in the first state in the time during which the first signal waits for processing after being sent.

As one embodiment, a response to all cells in the first cell set being in the first state is used for triggering stopping at least the latter of the first timer and a second timer;
wherein an operation period of the second timer is the maximum duration until one downlink retransmission is received, and the operation period of the second timer is used for determining the active time of the first DRX group.

As one embodiment, all cells in the first cell set being in the first state is used for triggering stopping at least the latter of the first timer and a third timer,
wherein an operation period of the third timer is the shortest time to downlink allocation for HARQ retransmissions expected for a MAC entity of the first node.

As one embodiment, the second transmitter 1101 sends third signaling; the third signaling is DCI, or the third signaling is a MAC CE; the third signaling is used for activating at least one cell in the first cell set applying the first state; and the third signaling is used for triggering the stopping of the first timer.

As one embodiment, the time during which the at least one cell in the first cell set enters the first state is related to the reception time of the third signaling, and when the third signaling is received 4 ms before the at least one cell in the first cell set leaving the first state, the any cell in the first cell set applying the first state is immediately activated; and when the third signaling is received within 4 ms of the at least one cell in the first cell set leaving the first state, the any cell in the first cell set applying the first state is not immediately activated.

As one embodiment, the second node is a satellite.

As one embodiment, the second node is a base station.

As one embodiment, the second node is a relay.

As one embodiment, the second node is an access point.

As one embodiment, the second node is a node supporting multicast.

As one embodiment, the second transmitter 1101 comprises at least one of the antenna 420, the transmitting device 418, the transmitting processor 416, the multi-antenna transmitting processor 471, the controller/processor 475, and the memory 476 in Embodiment 4.

As one embodiment, the second receiver 1102 comprises at least one of the antenna 420, the receiving device 418, the receiving processor 470, the multi-antenna receiving processor 472, the controller/processor 475, and the memory 476 in Embodiment 4.

Those skilled in the art can understand that all or part of the steps in the above methods can be completed by instructing the relevant hardware through a program, and the program can be stored in a computer-readable storage medium, such as a read-only memory, a hard disk, or an optical disk. Optionally, all or part of the steps in the above embodiments can also be implemented using one or more integrated circuits. Correspondingly, each module unit in the above embodiments can be implemented in the form of hardware or in the form of a software function module. The present application is not limited to any specific form of combination of software and hardware. The user equipment, terminal, and UE in the present application include but are not limited to drones, communication modules on drones, remote-controlled aircrafts, aircrafts, small airplanes, mobile phones, tablet computers, notebook computers, vehicle-mounted communication devices, wireless sensors, network access cards, Internet of Things terminals, RFID terminals, NB-IoT terminals, MTC (Machine Type Communication) terminals, eMTC (enhanced MTC) terminals, data cards, network access cards, vehicle-mounted communication devices, low-cost mobile phones, low-cost tablet computers, satellite communication devices, ship communication devices, NTN user equipment, and other wireless communication devices. The base station or system device in the present application includes but is not limited to macrocellular base stations, microcellular base stations, Femtocells, relay base stations, gNB (NR Node B) NR Node B, TRPs (Transmitter Receiver Points), NTN base stations, satellite devices, flight platform devices, and other wireless communication devices.

The present invention may be practiced in other designated forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be included therein.

## Claims

1. A first node for wireless communication, comprising:
a first receiver receiving first signaling and second signaling, wherein the first signaling is used for configuring a first DRX (Discontinuous Reception) group; the first DRX group comprises a first cell set; the second signaling is used for configuring a first state of at least one cell in the first cell set;
the first receiver monitors a PDCCH (physical downlink control channel) during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

2. The first node according to claim 1, wherein
a feature of one cell in the first state comprises that the one cell turns off data transmission based on dynamic scheduling.

3. The first node according to claim 1 or 2, wherein
the meaning of the sentence "an operation period of the first timer is used for determining the active time of the first DRX group" is: the active time of the first DRX group comprises an intersection of a time during which at least one cell in the first cell set is not in the first state and the operation period of the first timer; and the active time of the first DRX group does not comprise a time during which each cell in the first cell set is in the first state in the operation period of the first timer.

4. The first node according to any one of claims 1 to 3, comprising:
a first transmitter sending a first signal on a PUCCH (Physical Uplink Control Channel), the first signal being used for requesting scheduling,
wherein the active time of the first DRX group comprises an intersection of a time during which at least one cell in the first cell set is not in the first state and a time during which the first signal waits for processing after being sent; and the active time of the first DRX group does not comprise a time outside the time during which at least one cell in the first cell set is not in the first state in the time during which the first signal waits for processing after being sent.

5. The first node according to any one of claims 1 to 4, comprising:
the first receiver that stops at least the latter of the first timer and a second timer as a response to all cells in the first cell set being in the first state,
wherein an operation period of the second timer is the maximum duration until one downlink retransmission is received, and the operation period of the second timer is used for determining the active time of the first DRX group.

6. The first node according to any one of claims 1 to 5, comprising:
the first receiver that stops at least the latter of the first timer and a third timer as a response to all cells in the first cell set being in the first state,
wherein an operation period of the third timer is the shortest time to downlink allocation for HARQ (Hybrid Automatic Repeat reQuest) retransmissions expected by a MAC (Media Access Control) entity of the first node.

7. The first node according to any one of claims 1 to 6, comprising:
the first receiver receiving third signaling, wherein the third signaling is used for activating at least one cell in the first cell set applying the first state; and as a response to receiving the third signaling, the first timer is stopped.

8. The first node according to claim 7, wherein
a time during which the at least one cell in the first cell set enters the first state is related to a reception time of the third signaling, and when the third signaling is received 4 ms before the at least one cell in the first cell set leaves the first state, the any cell in the first cell set applying the first state is immediately activated; and when the third signaling is received within 4 ms of the at least one cell in the first cell set leaving the first state, the any cell in the first cell set applying the first state is not immediately activated.

9. The first node according to any one of claims 1 to 8, wherein
the second signaling is RRC signaling.

10. The first node according to claim 9, wherein
the second signaling comprises an RRCReconfiguration message.

11. The first node according to any one of claims 1 to 9, wherein
the second signaling is broadcast.

12. The first node according to any one of claims 1 to 11, wherein
the first state is a state when DTX of a cell is inactive.

13. The first node according to any one of claims 1 to 12, wherein
the first state is a state when DRX of a cell is inactive.

14. A second node for wireless communication, comprising:
a second transmitter sending first signaling and second signaling, wherein the first signaling is used for configuring a first DRX group; the first DRX group comprises a first cell set; the second signaling is used for configuring a first state of at least one cell in the first cell set;
a recipient of the first signaling monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

15. A method used in a first node for wireless communication, comprising:
receiving first signaling and second signaling, wherein the first signaling is used for configuring a first DRX group; the first DRX group comprises a first cell set; the second signaling is used for configuring a first state of at least one cell in the first cell set;
and monitoring a PDCCH during an active time of the first DRX group, the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.

16. A method used in a second node for wireless communication, comprising:
sending first signaling and second signaling, wherein the first signaling is used for configuring a first DRX group; the first DRX group comprises a first cell set; the second signaling is used for configuring a first state of at least one cell in the first cell set;
a recipient of the first signaling monitors a PDCCH during an active time of the first DRX group; the active time of the first DRX group only comprises a time during which at least one cell in the first cell set is not in the first state,
wherein the first signaling is used for configuring a first timer, and an operation period of the first timer is used for determining the active time of the first DRX group; and the first timer only operates at a beginning of one DRX cycle.
